# EUROPÄISCHE PATENTANMELDUNG

(11) **EP 3 517 397 A1**
(43) Veröffentlichungstag der Anmeldung: **31.07.2019**
(21) Anmeldenummer: 18154102.0
(22) Anmeldetag: 30.01.2018
(51) Int. Cl.: B61L 15/00, B61L 23/04

(54) **VERFAHREN ZUR INNENRAUMZUSTANDSÜBERWACHUNG, SOWIE FAHRZEUG MIT EINER INNENRAUMZUSTANDSÜBERWACHUNGSEINRICHTUNG**

(71) Anmelder: Bombardier Transportation GmbH, 10785 Berlin (DE)
(72) Erfinder: Mazzone, Andrea, 8008 Zürich (CH); Gerster, Christian, 8400 Winterthur (CH); Wirth, Christian, 8404 Winterthur (CH)
(74) Vertreter: Patentanwälte Bressel und Partner mbB

(57) **Zusammenfassung**

Die Erfindung betrifft ein Verfahren zur Innenraumzustandsüberwachung, sowie Fahrzeug (1) mit einer Innenraumzustandsüberwachungseinrichtung, umfassend:
- wenigstens einen Innenraumeinrichtungsgegenstand (2, 21, 22), wobei dieser Innenraumeinrichtungsgegenstand im Fahrzeuginnenraum (3) angeordnet ist
- wenigstens ein Bildaufnahmegerät (4, 41) zur Überwachung des Fahrzeuginnenraums (3), wobei das Bildaufnahmegerät (4, 41) im Fahrzeuginnenraum (3) angeordnet ist
- eine Einrichtung zur Auswertung der Bilddaten der Bildaufnahmegeräte (4, 41), wobei die Auswerteeinrichtung (9) Bilddaten von den Bildaufnahmegeräten (4, 41) empfängt,
- wobei die Auswerteeinrichtung (9) anhand der Bilddaten einen Ist-Zustand der Innenraumeinrichtungsgegenstände (2, 21, 22) ermittelt, diesen Ist-Zustand mit einem Soll-Zustand der Innenraumeinrichtungsgegenstände (2, 21, 22) vergleicht und bei einer Abweichung diese Abweichung feststellt.

## Beschreibung

Die vorliegende Erfindung betrifft ein Verfahren zur Innenraumzustandsüberwachung eines Fahrzeugs, sowie ein Fahrzeug mit einer Innenraumzustandsüberwachungseinrichtung.

Es ist ein genereller Trend in der Industrie zu erkennen, der weg von der vorbeugenden Instandhaltung, hin zur zustandsorientierten Instandhaltung von Fahrzeugen führt.
Unter vorbeugender Instandhaltung werden insbesondere Instandhaltungsmaßnahmen verstanden, die in geplanten zeitlichen Abständen, oder nach vorgeschriebenen Kriterien durchgeführt werden, obwohl ein Instandhaltungsobjekt nicht zwingend instandhaltungsbedürftig ist.

Im Gegensatz zur vorbeugenden Instandhaltung, wird bei der zustandsorientierten Instandhaltung in regelmäßigen Abständen der Zustand des Instandhaltungsobjekts überprüft, wobei allfällige Instandhaltungsmaßnahmen ausschließlich bei Bedarf durchgeführt werden.

Weitergehende Definitionen bezüglich der Begrifflichkeiten, finden sich in der Norm "DIN EN 13306 - Instandhaltung: Begriffe der Instandhaltung".

Das Ziel der zustandsorientierten Instandhaltung ist es, die Instandhaltungskosten zu reduzieren, da Instandhaltungsobjekte ausschließlich instandgesetzt werden, falls dies erforderlich ist.
Die Überprüfung der Instandhaltungsobjekte, die sogenannte Inspektion, bedarf jedoch für gewöhnlich des Zutuns von speziell ausgebildetem Wartungspersonal, welches den Zustand des Instandhaltungsobjekts überprüft und gegebenenfalls Instandhaltungsmaßnahmen durchführt.

Gerade bei komplexen technischen Produkten, wie beispielsweise Fahrzeugen, nehmen die Kosten für die Inspektion durch Wartungspersonal einen Großteil der Instandhaltungskosten ein.

Insbesondere im Hinblick auf die zunehmende Automatisierung der Fahrzeuge ist es daher vorteilhaft, die Inspektion der Instandhaltungsobjekte weitestgehend zu technisieren, um die Instandhaltungskosten zu senken.

Gerade im Fahrzeuginnenraum, wie beispielsweise im Fahrzeuginnenraum eines Schienenfahrzeugs, ist eine Vielzahl von Instandhaltungsobjekten vorzufinden. Die Instandhaltungsobjekte im Fahrzeuginnenraum sind für gewöhnlich Innenraumeinrichtungsgegenstände. Diese sind instandhaltungsbedürftig, also verschleißbehaftet und/oder können Fehlfunktionen aufweisen.
Der Inspektionsaufwand ist aufgrund der Vielzahl von Innenraumeinrichtungsgegenständen und deren Komplexität immens.

Es ist Aufgabe der vorliegenden Erfindung, ein Verfahren zur Innenraumzustandsüberwachung, sowie ein Fahrzeug mit einer Einrichtung zur Innenraumzustandsüberwachung zu schaffen, welche die manuelle Inspektionstätigkeit des Fahrzeuginnenraums durch Wartungspersonal weitestgehend reduziert oder gar verzichtbar macht.
Die Erfindung führt vorteilhafterweise zu einer Reduzierung von finanziellen Aufwänden für die Instandhaltung, was maßgeblich im Sinne der Fahrzeughalter ist.

Die Aufgabe wird erfindungsgemäß durch die Merkmale der unabhängigen Ansprüche 1 und 11 gelöst.
Vorteilhafte Weiterbildungen des Verfahrens sowie des Fahrzeugs sind Gegenstand der hierauf rückbezogenen Unteransprüche.

Fahrzeuge weisen für gewöhnlich einen Fahrzeuginnenraum auf, der vornehmlich dazu dient, Passagiere und/oder Transportgut zu transportieren. Der Fahrzeuginnenraum ist mit Innenraumeinrichtungsgegenständen, kurz Einrichtungsgegenständen, ausgestattet. Bei den Einrichtungsgegenständen kann es sich hierbei beispielsweise um gewöhnliche Sitze handeln.
Bei kleinen und/oder puristischen Fahrzeugen kann der Fahrzeuginnenraum lediglich mit einem Einrichtungsgegenstand, wie beispielsweise einem Sitz, ausgestattet sein.

Auch kann es sich bei den Einrichtungsgegenständen um Türen, Treppenaufgänge, Haltestangen, Vertäfelungen, Ablagen für Gegenstände oder Ähnliches handeln, wie sie heutzutage typischerweise in Fahrzeugen für den Transport von Passagieren und/oder den Transport von Transportgut vorzufinden sind.

Insbesondere sind Fahrzeuge, wie etwa Schienenfahrzeuge, häufig mit Bildaufnahmegeräten ausgestattet, die der Überwachung des Fahrzeuginnenraums, insbesondere der sich darin befindlichen Passagiere und/oder Gegenstände dienen.
Kleinere Fahrzeuge, wie beispielsweise Automobile, sind häufig mit nur einem Bildaufnahmegerät ausgestattet.

Es ist anzumerken, dass sich die Erfindung keinesfalls auf den Einsatz in spurgebundenen Fahrzeugen beschränkt ist, obwohl dies besonders bevorzugt wird. Die Erfindung kann auch in Automobilen, Luftfahrzeugen, oder ähnlichen Transportmitteln eingesetzt werden, wobei die vorangegangene Auflistung nicht abschließend ist.

Vorzugsweise werden die Bilddaten der vorgenannten Bildaufnahmegeräte an ein Anzeigemittel in unmittelbarer Nähe eines Fahrzeugführers und/oder einer Betriebszentrale übertragen und dargestellt.
Aufgrund der Darstellung erhält der Fahrzeugführer und/oder die Betriebszentrale Informationen über den Zustand des Fahrzeuginnenraums, sogenannte Zustandsinformationen. Der Begriff "Zustandsinformation" ist jedoch nicht auf die Darstellung des Zustands über den Fahrzeuginnenraum beschränkt. Vielmehr ist unter Zustandsinformation eine Information zu verstehen, die es dem Fahrzeugführer und/oder einer Betriebszentrale ermöglicht, den Zustand des Fahrzeugs und/oder seiner Umgebung zu beurteilen. Die Zustandsinformationen können deshalb auch spezifische Prozessparameter des Fahrzeugs, wie beispielsweise die Geschwindigkeit, die Außentemperatur, die Position des Fahrzeugs, usw. umfassen.

Eine Betriebszentrale (oder auch Betriebsleitstelle) ist vornehmlich eine Einrichtung, die häufig auf dem Gebiet von Massentransportlösungen anzutreffen ist. Die Betriebszentrale ist unter anderem für die Steuerung und/oder den Betrieb eines großen Verkehrsnetzes und der sich darin befindlichen Fahrzeuge zuständig. Vorzugsweise ist die Betriebszentrale ortsfest.
Bei der Betriebszentrale kann es sich jedoch auch um eine Instandhaltungszentrale handeln, die vornehmlich für die Koordination von Wartungspersonal und/oder für die Durchführung von Wartungsarbeiten zuständig ist.

Bei den Bildaufnahmegeräten handelt es sich vorzugsweise um eine Mehrzahl von Videokameras, die vornehmlich den gesamten Fahrzeuginnenraum, jedoch zumindest Teile davon, erfassen.
Bereiche des Fahrzeuginnenraums, in denen die Persönlichkeitsrechte der Passagiere gewahrt bleiben müssen, wie beispielweise in den Nasszellen eines Schienenfahrzeugs, können von der Erfassung mit Bildaufnahmegeräten ausgenommen sein.

Bei den Anzeigemitteln handelt es sich vorzugsweise um jegliche Art von Vorrichtung, die der Darstellung und/oder Anzeige von veränderlichen Informationen dient.

Um eine kabellose Übertragung von Zustandsinformationen über den Fahrzeuginnenraum und/oder des Fahrzeugs und/oder seiner Umgebung an eine Betriebszentrale zu ermöglichen, ist das Vorhandensein zumindest eines Kommunikationsmittels zur kabellosen Kommunikation im Fahrzeug erforderlich.

Das Kommunikationsmittel kommuniziert vorzugsweise auf Basis gebräuchlicher Mobilfunktechnologien und/oder anderer auf Funk basierender Kommunikationstechnologien.

Die Kommunikation als solche ist jedoch vorzugsweise nicht auf den Austausch von Zustandsinformationen beschränkt. Auch können weitere Daten jeglicher Art zwischen dem Fahrzeug und einer Betriebszentrale ausgetauscht werden. Wichtig ist hierbei hervorzuheben, dass die Übertragung vorzugsweise ausgehend vom Kommunikationsmittel des Fahrzeugs zu einem Kommunikationsmittel der Betriebszentrale, aber auch von einem Kommunikationsmittel einer Betriebszentrale zum Kommunikationsmittel des Fahrzeugs erfolgen kann. Eine bilaterale Kommunikation wird besonders bevorzugt.

Das Fahrzeug umfasst ferner eine Einrichtung zur Auswertung, kurz Auswerteeinrichtung, von Bilddaten, die derart ausgestaltet ist, dass sie Bilddaten der Bildaufnahmegeräte im Fahrzeuginnenraum empfangen und auswerten kann. Bei der Auswerteeinrichtung handelt es sich vorzugsweise um eine elektronische Datenverarbeitungsanlage, wie beispielsweise ein Computer.

Unter Bilddaten sind hierbei die digitalisierten Bildinformationen des Fahrzeuginnenraums zu verstehen, die durch die Bildaufnahmegeräte erfasst werden.

Die Auswertung als solche umfasst hierbei, dass die Bilddaten auf bestimmte vorhandene Merkmale mit Hilfe von Bildauswertealgorithmen untersucht werden.
Die Auswertung umfasst vorzugsweise ferner, dass Merkmale in den Bilddaten wie etwa Kontraste, Formen und/oder Farben erkannt und/oder ausgewertet werden. Diese Erkennung und/oder Auswertung erfolgt vorzugsweise in einer dafür ausgestalteten Auswerteeinheit in der Auswerteeinrichtung.

Ein weiterer Algorithmus, der vorzugsweise ebenfalls in der Auswerteeinheit ausgeführt wird, erkennt auf Basis dieser Merkmale die Instandhaltungsobjekte und deren Beschaffenheit zum Zeitpunkt der Auswertung. Es wird bevorzugt, dass diese Auswertung und/oder Erkennung in Echtzeit erfolgt.

Der Soll-Zustand der Innenraumeinrichtungsgegenstände, liegt der Auswerteeinheit vorzugsweise in Form von Referenzdaten und/oder bestimmter Referenzmerkmale vor, die in einer Speichereinheit der Auswerteeinrichtung beheimatet sind.

Unter Verwendung der zuvor beschriebenen Algorithmen werden Merkmale in den Referenzdaten ausgewertet, wobei dadurch keine Referenzmerkmale benötigt werden.

Bei den Referenzdaten handelt es sich vorzugsweise um Bilddaten, die als Referenz für den Algorithmus dienen. Hingegen beziehen sich die Referenzmerkmale, auf die zuvor beschriebenen Merkmale.

Bei einem alternativen, aber besonders bevorzugten Ansatz werden Bilddaten sowie Referenzdaten aus der Speichereinheit in einer dafür vorgesehenen Vergleichseinheit überlagert, so dass Negativbildinformationen entstehen. Diese Negativbildinformationen enthalten ausschließlich die Abweichungen zwischen den Bilddaten der Bildaufnahmegeräte und der Referenzdaten.
Durch die Auswertung der Merkmale in den Negativbildinformationen, wie etwa Kontraste, Formen und/oder Farben, kann mit Hilfe eines Algorithmus die Beschaffenheit des Instandhaltungsobjekts erfasst werden, wobei es sich hierbei direkt um die Abweichung der Beschaffenheit zwischen einem Soll- und einem Ist-Zustand handelt.
Durch diesen besonders bevorzugten Ansatz ist es möglich, die Erkennung innerhalb der Auswerteeinrichtung besonders recheneffizient umzusetzen.

Die Auswerteeinrichtung ist aufgrund der vorgenannten Ansätze in der Lage, anhand der Bilddaten einen Ist-Zustand der Innenraumeinrichtungsgegenstände zu ermitteln und diesen Ist-Zustand mit einem Soll-Zustand zu vergleichen.

Beim Vorhandensein einer Abweichung zwischen Ist-Zustand und Soll-Zustand der Innenraumeinrichtungsgegenstände, stellt die Auswerteeinrichtung diese Abweichung fest.

Unter Ist-Zustand der Innenraumeinrichtungsgegenstände wird insbesondere der Zustand verstanden, wie er zum Zeitpunkt der Auswertung erfasst wird und/oder vorliegt.

Hingegen wird unter Soll-Zustand der Innenraumeinrichtungsgegen-stände insbesondere der Zustand verstanden, wie er zum Zeitpunkt der Auswertung bestehen soll, insbesondere durch die Referenzdaten und/oder der Referenzmerkmale in der Speichereinheit vorgegeben ist.

Bei den Innenraumeinrichtungsgegenständen ist zwischen gewöhnlichen, funktionslosen Einrichtungsgegenständen und funktionsbehafteten Einrichtungsgegenständen, sogenannten Funktionseinrichtungsgegenständen, zu unterscheiden.
Da diese im Fahrzeuginnenraum angeordnet sind, kann auch die Bezeichnung Funktionsinnenraumeinrichtungsgegenstand verwendet werden.
Der Ausdruck "Funktion" bezeichnet ausschließlich die technische Funktion des Innenraumeinrichtungsgegenstands und nicht die Konstruktions- oder Gebrauchsfunktion.

Als funktionslose Innenraumeinrichtungsgegenstände werden beispielsweise gewöhnliche Sitze oder Haltestangen angesehen. Funktionsinnenraumeinrichtungsgegenstände hingegen sind Einrichtungsgegenstände, die zumindest eine technische Funktion aufweisen. Dies können beispielsweise Klappsitze oder motorisierte Türen sein.

Funktionslose Innenraumeinrichtungsgegenstände sind vornehmlich verschleißbehaftet. So kann beispielsweise die Oberfläche eines Sitzes Verschleißerscheinungen, durch die mechanische Beanspruchung mit Passagieren und/oder Transportgut, aufweisen.
Unter Verschleiß ist jedoch in diesem Zusammenhang nicht ausschließlich ein fortschreitender Materialverlust zu verstehen. Auch ist eine weitzufassende Veränderung der Oberfläche zu verstehen, die auf Zerstörung oder Beschädigung der Oberfläche des Innenraumeinrichtungsgegenstands zurückzuführen ist.
Die Auswerteeinrichtung ist in der Lage, solch eine Abweichung festzustellen.

Hingegen weisen Funktionseinrichtungsgegenstände eine erweiterte technische Funktionalität auf.
Diese Funktionalität wird häufig durch den Einsatz mechanischer und/oder elektrischer Bauteile ermöglicht, die in den Innenraumeinrichtungsgegenständen verbaut sind. Verschleißerscheinungen an den mechanischen und/oder elektrischen Bauteilen der Funktionseinrichtungsgegenstände führen in letzter Konsequenz zu einer Funktionsuntüchtigkeit.

Unabhängig davon, ob es sich um funktionslose Innenraumeinrichtungsgegenstände, oder Funktionsinnenraumeinrichtungsgegenstände handelt, sind diese aufgrund dieser Verschleißerscheinungen und/oder Fehlfunktionen instandhaltungsbedürftig.

Vorzugsweise sind im Fahrzeuginnenraum auch Einrichtungsgegenstände vorhanden, die steuerbar sind. Solche Innenraumeinrichtungsgegenstände sind Funktionsinnenraumeinrichtungsgegenstände, die mit mechanischen und/oder elektrischen Bauelementen versehen sind, die eine Ausführung vorbestimmter Funktionen ermöglichen.

Die Ausführung der Funktion oder Funktionen wird vorzugsweise durch die Auswerteeinrichtung ausgelöst und/oder gesteuert. Die Auswerteeinrichtung erkennt anhand der Auswertung der Bilddaten, dass die Auslösung der Funktion notwendig wird, falls bestimmte Kriterien erfüllt sind.
Dies ist beispielsweise der Fall, wenn ein Passagier an eine Durchgangstür herantritt, um durch diese hindurchzutreten, wobei es sich bei der Durchgangstür um eine steuerbare Durchgangstür handelt.

Werden solche Funktionen von der Auswerteeinrichtung ausgelöst und/oder gesteuert, kann vorteilhafterweise auf einzelne und/oder alle Sensoren in steuerbaren Funktionsinnenraumeinrichtungsgegenständen verzichtet werden. Die Auswerteeinrichtung ist insbesondere derart ausgestaltet, dass sie bestimmte Sensoren in den Einrichtungsgegenständen ersetzen kann.
Gerade bei Durchgangstüren kann deshalb auf einen Näherungssensor verzichtet werden, der ansonsten für die Auslösung der Funktion vorgesehen sein müsste.

Die Auswerteeinrichtung kann derart ausgestaltet sein, dass sie im Fahrzeuginnenraum zumindest zwischen drei verschiedenen Arten von Innenraumeinrichtungsgegenständen, nämlich funktionslosen, funktionsbehafteten und steuerbaren funktionsbehafteten Innenraumeinrichtungsgegenständen unterscheiden kann.
Diese Anforderung an die Auswerteeinrichtung, insbesondere an die vorgesehenen Auswertealgorithmen, ist äußert wichtig, denn je nach Art des Innenraumeinrichtungsgegenstands kommt es zu einem spezifischen Fehlerbild, welches es zu unterscheiden und zu erkennen gilt.

So kann beispielsweise ein funktionsloser Innenraumeinrichtungsgegenstand keinesfalls eine technische Fehlfunktion aufweisen, da dieser als funktionslos gilt.
Auch muss die Auswerteeinrichtung zwischen typisch vorkommenden betrieblichen Abweichungen und den Abweichungen zwischen Soll- und Ist-Zustand in einem Fehlerfall unterscheiden können.

Betriebliche Abweichungen sind beispielsweise solche Abweichungen, die durch die Interaktionen von Passagieren und/oder Transportgut mit den Innenraumeinrichtungsgegenständen entstehen.
Passagiere und/oder Transportgut können beispielsweise Teile eines Innenraumeinrichtungsgegenstands verdecken. In einem solchen Fall handelt es sich um eine gewöhnliche und betriebsbedingte Abweichung zwischen Soll- und Ist-Zustand, wobei die Auswerteeinrichtung hierbei nicht auf eine ungewollte Abweichung, oder auf das Vorhandensein einer inspektionswürdigen Abweichung schließen darf.

Vorzugsweise handelt es sich bei den Bildaufnahmegeräten um bekannte und gebräuchliche Videokameras, die gewöhnlicher Weise der Überwachung des Fahrzeuginnenraums, insbesondere der Personenüberwachung dienen. Sie weisen eine mittlere bis hohe Auflösung auf.
Die Auflösung ist bevorzugt ausreichend, um selbst kleine Gegenstände mit einer für den Anwendungszweck ausreichenden Genauigkeit erfassen zu können.

Insbesondere kann, wenn eine Abweichung vom Soll-Zustand festgestellt wird, eine Meldung auf dem Anzeigemittel zur Anzeige von Zustandsinformationen erscheinen. Insbesondere wenn die Auswerteeinrichtung eine Abweichung zwischen einem Soll-Zustand und einem Ist-Zustand feststellt, so wird vorzugsweise eine Meldung auf dem Anzeigemittel und/oder den Anzeigemitteln zur Anzeige von Zustandsinformationen angezeigt. Der Vorgang wird von der Auswerteeinrichtung ausgelöst. Auch wird der Inhalt, respektive die beinhalteten Informationen der Meldung, von der Auswerteeinrichtung bestimmt.
Diese Meldung wird beispielsweise auf einem Anzeigemittel in unmittelbarer Nähe des Fahrzeugführers dargestellt.
Besonders bevorzugt wird es jedoch, dass die Meldung auf weiteren Anzeigemitteln, welche sich im Fahrzeuginnenraum befinden, angezeigt wird. Hierbei kann es sich um ortsfeste unbewegliche Anzeigemittel handeln, die im Fahrzeuginnenraum angebracht sind.

Alternativ handelt es sich jedoch um bewegliche Anzeigemittel, die sich im Fahrzeuginnenraum befinden, beziehungsweise die durch Wartungspersonal in den Fahrzeuginnenraum eingebracht werden. Insbesondere kann es sich hierbei um Mobilgeräte handeln.

Vorzugsweise enthält die Meldung Informationen über die Art der Abweichung. Unter Art der Abweichung wird insbesondere eine detaillierte Beschreibung der Abweichung verstanden, beispielsweise, dass ein Funktionseinrichtungsgegenstand eine Fehlfunktion aufweist und um welche Art von Fehlfunktion es sich hierbei handelt.
Überdies wird vorzugsweise in der Meldung die Kennung und/oder Position des Einrichtungsgegenstands im Fahrzeuginnenraum angezeigt.
Unter Kennung wird beispielsweise eine alphanummerische Zuordnung von Innenraumeinrichtungsgegenständen verstanden.
Eine gleichwertige Zuordnung findet vorzugsweise für die Position des Einrichtungsgegenstands im Fahrzeuginnenraum Anwendung.
Dies ist insbesondere vorteilhaft wenn es sich um ein Fahrzeug handelt, welches eine große Anzahl an Innenraumeinrichtungsgegenständen aufweist, wobei die Innenraumeinrichtungsgegenstände in einem großen Volumen, wie zum Beispiel bei Schienenfahrzeugen, des Fahrzeuginnenraums verteilt sind. Überdies wird vorzugsweise eine Handlungsanweisung angezeigt, wie die Abweichung, insbesondere die Fehlfunktion, behoben werden kann.

Auch wird es bevorzugt, dass die Auswerteeinrichtung beim Feststellen einer (insbesondere relevanten) Abweichung zwischen einem Soll-Zustand und einem Ist-Zustand eine Information an eine Betriebszentrale sendet. Bevorzugt werden die beinhalteten Informationen durch die Auswerteeinrichtung festgelegt.
Hierzu findet die Übertragung der Informationen zwischen dem Fahrzeug und der Betriebszentrale kabellos statt.

Die Information enthält die Fahrzeugkennung, wobei jedes Fahrzeug über eine eigene, einzigartige Kennung verfügt, die beispielsweise alphanummerisch ist. Auch enthält die Information die Fahrzeugposition, wobei diese zum Zeitpunkt ermittelt wird, bei der die Abweichung festgestellt wird. Insbesondere wird die Fahrzeugposition mit Mitteln zur Positionsbestimmung, wie etwa GPS, ermittelt. Es ist jedoch auch möglich andere Mittel zur Positionsbestimmung zu verwenden.
Diese Mittel können auf Basis funkbasierter Triangulation, oder auch auf Basis aktueller RFID (radio-frequency identification) Technik basieren. Überdies enthält die Information beispielsweise die Kennung und/oder die Position des Innenraumeinrichtungsgegenstands im Fahrzeuginnenraum.

Vorzugsweise dient der Fahrzeuginnenraum ausschließlich dem Transport von Passagieren und/oder Transportgut.
Besonders bevorzugt handelt es sich jedoch um einen Fahrgastinnenraum, wie er typischerweise bei spurgebundenen Fahrzeugen vorkommt.
Die vorangegangene Beschreibung bezieht sich sowohl auf das beanspruchte Verfahren, wie auch auf das beanspruchte Fahrzeug.

Die Auswerteeinrichtung kann überdies, außerhalb des Fahrzeugs angeordnet sein. Beispielsweise kann es sich bei dieser externen Auswerteeinrichtung um eine cloudbasierte Applikation handeln.
Hierfür werden die Bilddaten der Bildaufnahmegeräte aus dem Fahrzeuginnenraum, an diese externe Einrichtung zur Auswertung übertragen und von ihr entsprechend der vorangegangenen Ausführungen ausgewertet.

Weitere Ausführungsformen und Vorteile von Ausgestaltungen der Erfindung ergeben sich aus der nachfolgenden Beschreibung, unter Bezugnahme auf die beigefügten Zeichnungen.

Die Figuren zeigen hierbei:
- Fig. 1:: Fahrzeug mit einer Innenraumzustandsüberwachungseinrichtung gemäß der bevorzugten erfindungsgemäßen Ausführungsform.
- Fig. 2:: Eine schematische Darstellung der Einrichtung zur Auswertung der Bilddaten.
- Fig. 3:: Eine schematische Darstellung eines Mittels zur Anzeige von Zustandsinformationen.
- Fig. 4:: Eine schematische Darstellung eines Nachrichtentelegramms zur Übertragung der Information des Innenraumzustands an eine Betriebszentrale.
- Fig. 5:: Eine schematische Darstellung eines Ablaufdiagramms, zur Detektion einer Abweichung eines Innenraumeinrichtungsgegenstands gemäß der bevorzugten erfindungsgemäßen Ausführungsform.

Nachfolgend bezeichnen gleiche Bezugszeichen Elemente mit gleichen oder ähnlichen technischen Merkmalen.

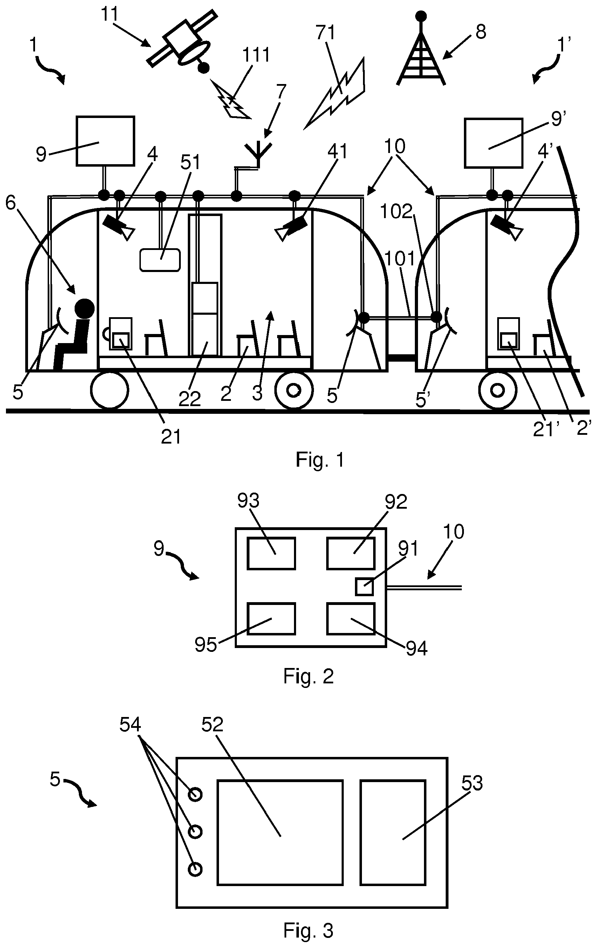

Fig. 1 zeigt ein Fahrzeug 1 mit einer Innenraumzustandsüberwachungseinrichtung, gemäß der bevorzugten erfindungsgemäßen Ausführungsform. Das Fahrzeug 1 ist in einem Fahrzeugverbund angeordnet, wie er typischerweise bei spurgebundenen Fahrzeugen, insbesondere Schienenfahrzeugen, vorkommt.

Der Fahrzeugverbund besteht in diesem Ausführungsbeispiel aus einem ersten Fahrzeug 1 und aus einem zweiten Fahrzeug 1'. Das erste Fahrzeug 1, sowie das zweite Fahrzeug 1' sind mit einer gleichgearteten Auswerteeinrichtung 9 ausgestattet. Dies ist durch ein Apostroph " ' " im Bezugszeichen angedeutet. Das Fahrzeug 1 weist einen Fahrzeuginnenraum 3 auf, der dem Aufenthalt von Passagieren und/oder dem Transport von Transportgut dient.

Der Fahrzeuginnenraum 3 ist mit einer Mehrzahl von Innenraumeinrichtungsgegenständen 2, 21, 22 ausgestattet.
Bei einem Teil der Innenraumeinrichtungsgegenstände 2, 21, 22 handelt es sich um Sitzmöbel, beispielsweise um gewöhnliche Sitze 2, oder auch um Sitzbänke (nicht dargestellt). Weitere Innenraumeinrichtungsgegenstände 2, 21, 22 sind Funktionssitzmöbel, wie etwa Klappsitze 21 und/oder andere Funktionseinrichtungsgegenstände, wie etwa Türen 22.

Außerdem sind im Fahrzeuginnenraum 3 Kameras 4 angeordnet, die der Überwachung von Personen dienen.
Überdies werden Multifunktionskameras 41 eingesetzt, die zusätzliche Funktionen, wie beispielsweise die Messung der Fahrzeuginnenraumtemperatur, ermöglichen.

Das Fahrzeug 1 ist mit einer Mehrzahl von Anzeigemitteln 5, 51 ausgestattet. Die Anzeigemittel 5, 51 befinden sich unter anderem im Führerstand und sind in Form eines Fahrerdisplays 5 ausgestaltet, wobei dieses Fahrerdisplay der Anzeige von Informationen für einen Fahrzeugführer 6 dient.
Auch weist der Fahrzeuginnenraum 3 Anzeigemittel 5, 51 auf, die in Form von Monitoren ausgeführt sind. Der Monitor 51 dient als Anzeigemittel 5, 51 zur Darstellung von Fahrgastinformationen. Es ist jedoch auch möglich, bei der Durchführung von Inspektionsarbeiten durch Wartungspersonal, Prozess- und/oder Zustandsinformationen des Fahrzeugs 1, und/oder Zustandsinformationen des Fahrzeuginnenraums 3 auf diesem Monitor 51 anzuzeigen.

Auch kann das Wartungspersonal mobile Geräte (nicht dargestellt) in den Fahrzeuginnenraum 3 einbringen, die dem Wartungspersonal Informationen über den Zustand des Fahrzeuginnenraums 3 und/oder weitergehende Prozess- und/oder Zustandsinformationen des Fahrzeugs 1 anzeigen.
Das Fahrzeug 1 weist außerdem eine Multifunktionssende- und Empfangseinrichtung 7 auf. Sie dient der kabellosen Datenübertragung 71 an eine Betriebszentrale 8, wobei Zustandsinformationen übertragen werden.
Auch ist die Multifunktionssende- und Empfangseinrichtung 7 derart ausgestaltet, dass sie Positionssignale 111 eines globalen Navigationssatellitensystems 11 empfängt.

Das Fahrzeug 1 ist überdies mit der erfindungsgemäßen Auswerteeinrichtung 9 ausgestattet.

Eine Vielzahl der zuvor beschriebenen Mittel ist an ein Kommunikationsbussystem 10 angeschlossen, wobei die Vielzahl der Mittel über diesen Kommunikationsbus 10 Daten und/oder Steuersignale austauschen. Hierbei sind die Tür 22, die Bildaufnahmegeräte 4, 41, die Anzeigemittel 5, 51, die Kommunikationseinrichtung 7 und die Auswerteeinrichtung 9 über das Kommunikationsbussystem 10 miteinander kommunikationstechnisch verbunden, sodass zumindest diese Mittel Daten und/oder Steuersignale austauschen.

Bei dem Kommunikationsbussystem 10 handelt es sich um ein Kommunikationsnetz, welches mehrere Subnetze (nicht dargestellt) aufweist, die an spezifischen Knotenpunkten 102 zusammengeführt werden.

Solche Subnetze werden unter anderem gebildet, um sicherheitskritische Kommunikationsnetze (nicht dargestellt) von nichtsicherheitskritischen Kommunikationsnetzten zu trennen.

Auch ist das Kommunikationsnetz und/oder Subnetz aus dem ersten Fahrzeug 1, über eine entsprechende Verbindung 101, mit dem Kommunikationsnetz des zweiten Fahrzeugs 1' verbunden, was einen Austausch von Daten und/oder Steuersignalen zwischen den Fahrzeugen 1, 1' des Fahrzeugverbunds ermöglicht.

In Fahrzeugen, insbesondere in Fahrzeugen für den Transport von Passagieren und/oder Transportgut, werden funktionslose Sitzmöbel 2, 21 eingesetzt.

Dennoch weisen zumindest Teile der Sitzmöbel 2, 21 bewegliche Elemente aufweisen, wie dies bei Klappsitzen 21 der Fall ist.

Bei weiteren Innenraumeinrichtungsgegenständen 2, 21, 22 handelt es sich um Türen 22, die den Fahrzeuginnenraum 3 von anderen Bereichen, wie beispielsweise Nasszellen (nicht dargestellt), trennen.
Diese weisen einen Mechanismus auf, der die Türen 22 öffnet und/oder schließt.

Der Mechanismus zum Öffnen und/oder Schließen der Tür 22 wird durch einen Bestätigungsmechanismus, beispielsweise einen Schalter, aktiviert. Auch wird die Tür 22 automatisch geöffnet, sobald ein Passagier an sie herantritt und geschlossen, sobald der Passagier durch die Tür 22 hindurchgetreten ist.

Der vorgenannte Mechanismus ist verschleißbehaftet, was zu einer Fehlfunktion führen kann, sodass die Tür nicht vollständig öffnet und/oder schließt.

Der gesamte Fahrzeuginnenraum 3, mit Ausnahme einiger spezieller Innenraumbereiche, wird mit Hilfe von Kameras 4, 41 erfasst.
Bereiche, wie beispielsweise Nasszellen, sind in nicht mit Kameras ausgestattet.
Dennoch ist es möglich, dass die Kameras diese Bereiche, oder zumindest Teile davon, erfassen, sobald die Tür vollständig geöffnet ist.
Dies ermöglicht eine Zustandserfassung dieser Bereiche, obwohl keine Kameras 4, 41 in diesem spezifischen Bereich vorgesehen sind.

Die Bilddaten der Kameras 4, 41 werden über das Kommunikationsbussystem 10 an weitere Busteilnehmer, beispielsweise an die Auswerteeinrichtung 9, übertragen.

Die Bilddaten werden an ein Videoaufnahmegerät (nicht dargestellt) und/oder an ein Fahrerdisplay 5 gesendet.
Auch ist es einer Betriebszentrale 8 möglich, über die kabellose Datenübertragung 71 und das Kommunikationsbussystem 10 auf die Bilddaten der Kameras 4, 41 zuzugreifen. Überdies werden Bilddaten der Kameras 4, 41 direkt an eine Betriebszentrale übertragen.

In Fig. 2 ist die erfindungsgemäße Einrichtung zur Auswertung der Bilddaten schematisch dargestellt.
Die Auswerteeinrichtung 9 besteht aus einer Kommunikationseinheit 91 die dem Empfang und Versand von Daten des Kommunikationsbusses dient. Überdies weist sie eine Speichereinheit 92 auf, die Referenzdaten über den Fahrzeuginnenraum 3 enthält. Außerdem ist eine Vergleichseinheit 93 vorhanden, die Bilddaten der Kameras 4, 41 mit den Referenzdaten der Speichereinheit 92 vergleicht.
Überdies ist eine Auswerteeinheit 94 vorgesehen, die derart ausgestaltet ist, die Abweichungen zwischen den Bilddaten der Kameras 4, 41 und der Referenzdaten festzustellen. Außerdem wird eine Ereigniseinheit 95 verwendet, die eine Mehrzahl von Reaktionen ausführt, falls eine Abweichung festgestellt worden ist.
Die vorgenannten Untereinheiten 91, 92, 93, 94, 95 sind derart ausgestaltet, um miteinander zu interagieren und eine Einrichtung 9 zu bilden.

Die Auswerteeinrichtung 9 ist über die Kommunikationseinheit 91 mit dem Kommunikationsbussystem 10 verbunden. Die Kommunikationseinheit empfängt Bilddaten der Kameras 4, 41 und bereitet diese Bilddaten entsprechend auf. Die Bilddaten werden mit einem Zeitstempel versehen und zwischengespeichert.
Die Kommunikationseinheit verfügt über einen Zwischenspeicher (nicht gezeigt. Dieser Zwischenspeicher wird benötigt, um eingehende Bilddaten der Mehrzahl der Kameras kurzzeitig zwischen zu speichern, bevor diese Bilddaten weiterverarbeitet werden. Die anderen Einheiten, insbesondere die Vergleichseinheit 93, greifen auf diesen Zwischenspeicher zu.

Die Speichereinheit 92 beheimatet Referenzdaten über den Fahrzeuginnenraum 3, die in einem nichtflüchtigen Speicher abgelegt sind. Diese Referenzdaten sind im Wesentlichen Bilddaten und weitere Daten, die den Soll-Zustand des Fahrzeuginnenraums 3 und/oder der Innenraumeinrichtungsgegenstände 2, 21, 22 repräsentieren.
Unter Soll-Zustand ist also der Fahrzeuginnenraum 3 und/oder sind die Innenraumeinrichtungsgegenstände 2, 21, 22 zu verstehen, die weder Abnutzungserscheinungen, noch Fehlfunktionen aufweisen.

Die Referenzdaten werden bei der Inbetriebnahme des Fahrzeugs 1 erzeugt, in dem Bildaufnahmen vom Fahrzeuginnenraum 3, zusammen mit weiteren benötigten Daten, in die Speichereinheit 92 gelegt werden.

Die Vergleichseinheit 93 greift auf die Bilddaten der Kameras 4, 41, aus dem Zwischenspeicher der Kommunikationseinheit 91 zu und vergleicht diese Bilddaten mit den Referenzdaten aus der Speichereinheit 92.

Hierfür werden typische Überlagerungsverfahren verwendet, die zum Stand der Technik gehören. Das Ergebnis dieser Überlagerung ist eine Negativbildinformation, die lediglich die Summe der Abweichungen enthält.
Zum Überlagerungsverfahren ist hierbei noch hervorzuheben, dass mehrere Kameras 4, 41 Bildausschnitte von ein- und demselben Bereich des Fahrzeuginnenraums 3 aufnehmen.

Die Vergleichseinheit 93 besitzt die nötige Funktionalität, um aus der Mehrzahl unterschiedlicher Aufnahmen von ein- und demselben aufgenommenen Bereich, ein resultierendes Gesamtbild zu erstellen.
Ähnliche Verfahren finden sich in einer Vielzahl heute gebräuchlicher Bildaufnahmegeräte, wie beispielsweise in digitalen Spiegelreflexkameras.

Die Auswerteeinheit 94 wertet die Negativbildinformationen der Vergleichseinheit 93 aus.
Das Ergebnis dieser Auswertung ist, ob eine relevante Abweichung zwischen dem Soll-Zustand und dem Ist-Zustand der Innenraumeinrichtungsgegenstände 2, 21, 22 besteht. Die Auswerteeinheit 94 unterscheidet hierbei, ob es sich bei der Abweichung um eine betriebsbedingte Abweichung handelt oder um eine Abweichung, die auf Verschleiß und/oder Fehlfunktionen der Innenraumeinrichtungsgegenstände 2, 21, 22 zurückzuführen ist.

Betriebsbedinge Abweichungen sind insbesondere solche Abweichungen, die durch Passagiere und deren Interaktion mit den Innenraumeinrichtungsgegenständen 2, 21, 22 auftreten. Verdeckt ein Passagier Teile von Innenraumeinrichtungsgegenständen 2, 21, 22, führt dies bei der Erkennung zu einer Abweichung zwischen Soll- und Ist-Zustand.
Dieser Zustand ist unter normalen Betriebsbedingungen zu erwarten und darf beim Feststellen einer Abweichung zu keiner Fehlinterpretation zwischen Soll- und Ist-Zustand führen. Die Auswerteeinheit 94 besitzt die nötige Funktionalität, um dies zu unterscheiden.

Überdies weist die Auswerteeinheit 94 Funktionen auf, um Bewegungen oder Bewegungsprofile von Fahrgästen zu erkennen. Solche Bewegungsprofile werden dazu verwendet, um zu erkennen, ob ein Fahrgast an eine Tür 22 herantritt, um durch diese hindurchzutreten.

Die Ereigniseinheit 95 führt mögliche Reaktionen auf Basis der Ergebnisse der Auswerteeinheit 94 aus.
Die Ereigniseinheit 95 sendet über das Kommunikationsbussystem 10 eine Nachricht an das Fahrerdisplay 5 oder an die Betriebszentrale 8, falls eine relevante Abweichung festgestellt wurde. Auch sind aufgetretene Ereignisse auf dem Monitor 51 im Innenraum 3 des Fahrzeugs 1 durch das Wartungspersonal abrufbar.

Die Ereigniseinheit 95 sendet einen Steuerbefehl an den Mechanismus einer Tür 22, falls mittels Bewegungsprofil festgestellt worden ist, dass ein Fahrgast in einen anderen Bereich wechseln möchte und deswegen an eine Tür 22 herantritt.

Fig. 3 zeigt eine schematische Darstellung eines Mittels zur Anzeige von Zustandsinformationen, insbesondere wird ein Fahrerdisplay 5 gezeigt.

Das Fahrerdisplay 5 ist in zwei Anzeigebereiche 52, 53 unterteilt.
Ein erster Anzeigebereich 52 ist für die Darstellung von Prozessdaten des Fahrzeugs vorhanden, ein zweiter Anzeigebereich 53 ist für die Anzeige von Zustandsinformationen vorgesehen.
Weiter ist das Anzeigemittel mit Eingabemitteln 54, wie etwa mechanische Taster oder berührungsempfindliche Bereiche, ausgestattet.

Im ersten Anzeigebereich 52 werden relevante Prozessdaten des Fahrzeugs 1, wie etwa die Fahrzeuggeschwindigkeit, angezeigt. Der zweite Anzeigebereich 53, wird für die Anzeige von Zustandsinformationen über das Fahrzeug 1 und/oder seiner Umgebung verwendet. Diese Zustandsinformationen sind nicht auf die Zustandsinformationen über den Fahrzeuginnenraum 3 beschränkt.

Falls durch die Auswerteeinrichtung 9 jedoch eine relevante Abweichung festgestellt worden ist, so wird ein Fahrzeugführer 6, in dem dafür vorgesehenen Anzeigebereich für die Zustandsinformation 53, über diese Abweichung informiert.

Diese Information enthält zumindest die Art der festgestellten Abweichung, also welcher Innenraumeinrichtungsgegenstand 2, 3, 22, oder welche Funktion eines Innenraumeinrichtungsgegenstands 2, 3, 22, nicht dem Soll-Zustand entspricht.

Außerdem wird die Kennung des Innenraumeinrichtungsgegenstands 2, 21, 22 und/oder Position des Innenraumeinrichtungsgegenstands 2, 21, 22 im Fahrzeuginnenraum 3 dargestellt, wobei bei einem Fahrzeugverbund auch das betreffende Fahrzeug 1, 1' im Fahrzeugverbund genannt wird.

Unter Kennung ist eine unverwechselbare Bezeichnung und Zuordnung des Innenraumeinrichtungsgegenstands 2, 21, 22 zu verstehen. Überdies enthält die Information eine Anweisung zur Behebung der Abweichung, falls sich die Abweichung durch den Fahrzeugführer 6 oder das Wartungspersonal beheben lässt.
Selbstverständlich ist diese Anweisung auch auf weiteren Anzeigemitteln 5, 51 im Fahrzeuginnenraum 3, oder Mobilgeräten (nicht gezeigt) abrufbar, um dem Wartungspersonal eine zeitsparende Identifikation des von der Abweichung betroffenen Innenraumeinrichtungsgegenstands 2, 21, 22 zu ermöglichen.

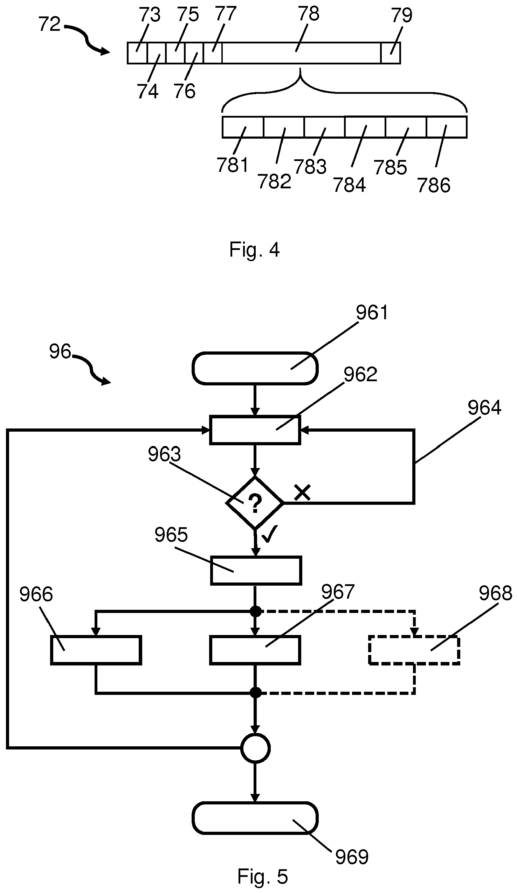

Fig. 4 zeigt eine schematische Darstellung eines Nachrichtentelegramms 72 zur Übertragung der Zustandsinformation des Fahrzeuginnenraums 3, an eine Betriebszentrale 8.

Die Multifunktionssende- und Empfangseinrichtung 7 des Fahrzeugs 1, wie auch die Sende- und Empfangseinrichtung (nicht dargestellt) eines Kommunikationspartners, weisen alle Schichten des geläufigen OSI-Modells auf. Gleichwohl wird im Folgenden genauer auf den Aufbau einer Nachricht eingegangen, um darzustellen, welche Informationen an eine Betriebszentrale 8 gesendet werden.

Das Nachrichtentelegramm 72 weist die Form eines Nachrichtentelegramms 72 auf, dass typischerweise für die drahtlose Kommunikation geeignet ist.

Das Nachrichtentelegramm 72 besteht aus einer Präambel 73, die der Synchronisation dient, gefolgt von einem sogenannten Starting Frame Delimiter 74, der den Beginn nachfolgender Paketelemente signalisiert. Überdies enthält das Telegramm eine Kennung des Empfängers 75 und des Absenders 76.
Der Empfänger einer solchen Nachricht ist die Betriebszentrale 8, wobei beim Vorhandensein einer Mehrzahl von Betriebszentralen, die Bevorzugte adressiert wird.

Das Typenfeld 77 definiert außerdem, um welche Art von Nachricht es sich hierbei handelt. Falls die Kommunikation nicht auf die Nachrichten über den Zustand der Innenraumeinrichtungsgegenstände 2, 21, 22 beschränkt ist, wird in dem Typenfeld definiert, dass es sich um eine andere als die bevorzugte Nachrichtenart handelt und darin andere Daten enthalten sind, die nicht Ausgangspunkt der Auswerteeinrichtung 9 sind.

Dem Typenfeld 77 folgend, sind die sogenannten Nutzdaten. Das Nutzdatensegment 78 besteht wiederum aus einer Mehrzahl von Untersegmenten 781 bis 786.
Das Nutzdatensegment 78 enthält zumindest die Fahrzeugkennung 781, die Fahrzeugposition 782, die Kennung 783 des Innenraumeinrichtungsgegenstands 2, 21, 22, die Position 784 des Innenraumeinrichtungsgegenstands 2, 21, 22 im Fahrzeuginnenraum 3, einen Zeitstempel des Ereignisses 785, sowie weitere, nicht näher beschriebene Daten 786.

Besonders ist hierbei die Fahrzeugposition 782 hervorzuheben, die mit Hilfe des Positionssignals 111 und der Multifunktionssende- und Empfangseinrichtung 7 ermittelt wird.

Die Information bezüglich der Kennung 783, sowie der Position 784 des Innenraumeinrichtungsgegenstands 2, 21, 22, stimmt mit der Information überein, die auf dem Fahrerdisplay 5 dargestellt wird, falls eine relevante Abweichung zwischen dem Soll-Zustand und dem Ist-Zustand detektiert worden ist.

Das Nachrichtentelegramm 72 weist an seinem Ende einen Bereich für die zyklische Redundanzprüfung, kurz CRC 79 auf.

Fig. 5 zeigt eine schematische Darstellung eines Ablaufdiagramms, wie es dem Verfahren zur Detektion einer Abweichung eines Innenraumeinrichtungsgegenstands 2, 21, 22, gemäß der erfindungsgemäßen Ausführungsform zugrunde liegt.

Die Durchführung des Verfahrens zur Überwachung des Fahrzeuginnenraums 3 startet 961 automatisch, sobald das Fahrzeug 1 in Betrieb genommen wird. Es endet 969, wenn das Fahrzeug 1 aus dem Betrieb genommen wird.

Nach dem Start der Überwachung 961, empfängt die Auswerteeinrichtung 9, über ein Kommunikationsbussystem 10, Bilddaten der Kameras 4, 41 und vergleicht 962 diese Bilddaten mit Referenzdaten, die den Soll-Zustand des Fahrzeuginnenraums 3 und/oder deren Innenraumeinrichtungsgegenstände 2, 21, 22, repräsentieren. Der Vergleich wird wiederkehrend 964 durchgeführt, bis bei einer nachgelagerten Auswertung 963 eine relevante Abweichung zwischen dem Soll-Zustand und dem Ist-Zustand der Innenraumeinrichtungsgegenstände 2, 21, 22 festgestellt wird.

Wurde eine relevante Abweichung festgestellt, so wird ein Ereignis 965 von der Auswerteeinrichtung 9 ausgelöst, was zu der Darstellung einer Information 966 auf dem Fahrerdisplay 5 des Fahrzeugführers 6, und/oder das Senden einer Nachricht 967 an eine Betriebszentrale 8 führt.

Die Durchführung des Verfahrens endet nicht mit dem Auslösen des Ereignisses. Vielmehr werden alle Instanzen die zur Behebung der Abweichung beitragen können, über die Abweichung informiert.

Dies ist sowohl der Fahrzeugführer 6, wie auch die Betriebszentrale 8 und/oder das Wartungspersonal (nicht dargestellt).

Das Verfahren wird nach dem Darstellen 966, 968 und/oder dem Versenden 967 der Informationen an eine Betriebszentrale 8, mit dem Vergleich der Bilddaten 962 fortgesetzt.

## Patentansprüche

1. Verfahren zur Innenraumzustandsüberwachung eines Fahrzeugs (1), folgende Merkmale umfassend:
- wenigstens einen Innenraumeinrichtungsgegenstand (2, 21, 22), wobei dieser Innenraumeinrichtungsgegenstand im Fahrzeuginnenraum (3) angeordnet ist
- wenigstens ein Bildaufnahmegerät (4, 41) zur Überwachung des Fahrzeuginnenraums (3), wobei das Bildaufnahmegerät (4, 41) im Fahrzeuginnenraum (3) angeordnet ist
- eine Einrichtung zur Auswertung der Bilddaten der Bildaufnahmegeräte (4, 41), wobei die Auswerteeinrichtung (9) Bilddaten von den Bildaufnahmegeräten (4, 41) empfängt,
wobei die Auswerteeinrichtung (9) anhand der Bilddaten einen Ist-Zustand der Innenraumeinrichtungsgegenstände (2, 21, 22) ermittelt, diesen Ist-Zustand mit einem Soll-Zustand der Innenraumeinrichtungsgegenstände (2, 21, 22) vergleicht und bei einer Abweichung diese Abweichung feststellt.

2. Verfahren nach Anspruch 1, **dadurch gekennzeichnet, dass** es sich bei den Innenraumeinrichtungsgegenständen (2, 21, 22) um Funktionsinnenraumeinrichtungsgegenstände (21, 22) handelt die verschleißbehaftet sind und/oder Fehlfunktionen aufweisen können.

3. Verfahren nach Anspruch 2, **dadurch gekennzeichnet, dass** steuerbare Funktionsinnenraumeinrichtungsgegenstände (22) ausschließlich durch die Einrichtung zur Auswertung der Bilddaten (9) gesteuert werden.

4. Verfahren nach einem der Ansprüche 1 bis 3, **dadurch gekennzeichnet, dass** es sich bei den Bildaufnahmegeräten (4, 41) im Fahrzeuginnenraum (3) um Videokameras handelt, die der Überwachung von Personen dienen.

5. Verfahren nach einem der Ansprüche 1 bis 4, **dadurch gekennzeichnet, dass** beim Feststellen einer Abweichung vom Soll-Zustand eine Meldung auf dem Anzeigemittel zur Anzeige von Zustandsinformationen (5, 51) erscheint.

6. Verfahren nach Anspruch 5, **dadurch gekennzeichnet, dass** die Meldung zumindest folgende Informationen enthält:
- Art der Abweichung;
- die Kennung und/oder Position des Innenraumeinrichtungsgegenstands (2, 21, 22) im Fahrzeuginnenraum (3);
- Anweisungen zur Behebung der Abweichung.

7. Verfahren nach einem der Ansprüche 1 bis 6, **dadurch gekennzeichnet, dass** beim Feststellen einer Abweichung eine Information an die Betriebszentrale (8) gesendet wird.

8. Verfahren nach Anspruch 7, **dadurch gekennzeichnet, dass** die Information über die Abweichung zumindest folgende Merkmale enthält:
- die Fahrzeugkennung;
- die Fahrzeugposition;
- die Kennung und/oder Position des Innenraumeinrichtungsgegenstands (2, 21, 22) im Fahrzeuginnenraum (3).

9. Verfahren nach einem der Ansprüche 1 bis 8, **dadurch gekennzeichnet, dass** der Fahrzeuginnenraum (3) ein Fahrgastinnenraum ist.

10. Fahrzeug (1) mit einer Innenraumzustandsüberwachungseinrichtung, umfassend:
- wenigstens einen Innenraumeinrichtungsgegenstand (2, 21, 22), wobei dieser Innenraumeinrichtungsgegenstand (2, 21, 22) im Fahrzeuginnenraum (3) angeordnet ist
- wenigstens ein Bildaufnahmegerät (4, 41) zur Überwachung des Fahrzeuginnenraums (3), wobei das Bildaufnahmegerät (4, 41) im Fahrzeuginnenraum (3) angeordnet ist
- eine Einrichtung zur Auswertung der Bilddaten (9) der Bildaufnahmegeräte (4, 41), wobei die Auswerteeinrichtung (9) Bilddaten von den Bildaufnahmegeräten (4, 41) empfängt,
wobei die Auswerteeinrichtung (9) ausgestaltet ist, anhand der Bilddaten einen Ist-Zustand der Innenraumeinrichtungsgegenstände (2, 21, 22) zu ermitteln, diesen Ist-Zustand mit einem Soll-Zustand der Innenraumeinrichtungsgegenstände (2, 21, 22) zu vergleichen und bei einer Abweichung diese Abweichung festzustellen.

11. Fahrzeug (1) nach Anspruch 10, **dadurch gekennzeichnet, dass** es sich bei den Innenraumeinrichtungsgegenständen (2, 21, 22) um Funktionsinnenraumeinrichtungsgegenstände (21, 22) handelt, die verschleißbehaftet sind und/oder Fehlfunktionen aufweisen können.

12. Fahrzeug (1) nach Anspruch 11, **dadurch gekennzeichnet, dass** steuerbare Funktionsinnenraumeinrichtungsgegenstände (22) ausschließlich durch die Einrichtung zur Auswertung der Bilddaten (9) gesteuert werden.

13. Fahrzeug (1) nach einem der Ansprüche 10 bis 12, **dadurch gekennzeichnet, dass** der Fahrzeuginnenraum (3) ein Fahrgastinnenraum ist.

14. Fahrzeug (1) nach einem der Ansprüche 10 bis 13, **dadurch gekennzeichnet, dass** das Fahrzeug ein spurgebundenes Fahrzeug ist.
